# EUROPÄISCHE PATENTANMELDUNG

(11) **EP 2 015 416 A1**
(43) Veröffentlichungstag der Anmeldung: **14.01.2009**
(21) Anmeldenummer: 08159969.8
(22) Anmeldetag: 09.07.2008
(51) Int. Cl.: H02G 1/12

(54) **Kabelabmantelwerkzeug**

(30) Priorität: 10.07.2007 DE 102007032399
(71) Anmelder: Rennsteig Werkzeuge GmbH, 98547 Viernau/Thür (DE)
(72) Erfinder: Hofmann, Horst, 98587 Unterschönau (DE); Wagner, Thomas, 98587 Bermbach (DE)
(74) Vertreter: Engel, Christoph Klaus

(57) **Zusammenfassung**

Die Erfindung betrifft ein Kabelabmantelwerkzeug umfassend einen hülsenförmigen Griff (01), welcher eine Nut (21) mit mindestens drei Rastungen aufweist, einen innerhalb des Griffs (01) angeordneten und mit diesem verbundenen Innenkörper (05), ein Schneidmesser (07), welches an dem aus dem Griff (01) herausragenden Ende des Innenkörpers (05) angeordnet ist, eine zwischen Griff (01) und Innenkörper (05) angeordnete Hülse (09) mit einem Bolzen (23), welcher in der Nut (21) des Griffs (01) geführt ist und im arbeitsbereiten Grundzustand des Abmantelwerkzeugs in Eingriff mit einer der Rastungen steht, einen mit der Hülse (09) verbundenen Haken (11, 13), der axial bewegbar ist und durch ein erstes Federmittel (15) relativ zu dem Schneidmesser (07) in Richtung auf eine Endposition vorgespannt ist. Griff (01) und Hülse (09) sind relativ zueinander um eine Achse drehbar. Der Griff (01) ist durch ein zweites Federmittel (19) gegenüber der den Haken (11, 13) tragenden Hülse (09) verschiebbar. Durch Verschieben des Griffs (01) in Richtung Haken (11, 13) und Drehen des Griffs (01) kann der Bolzen (23) von einer ursprünglich eingenommenen Raststellung in eine neue Raststellung gebracht werden, wobei die unterschiedlichen Rastungen mit unterschiedlichen Positionen des Schneidmessers (07) verbunden sind, um die wahlweise Ausführung eines Längsschnitts, eines Rundschnitts oder eines spiralförmigen Schnitts zu ermöglichen.

## Beschreibung

Die Erfindung betrifft ein Kabelabmantelwerkzeug.

Zum Abmanteln von Kabeln ist es bekannt, Werkzeuge einzusetzen, welche aus einem Grundkörper aus dem ein Schneidmesser vorsteht und einer mit dem Grundkörper verbunden Kabelklammer bestehen. Die in Form eines Hakenbauteils ausgestaltete Kabelklammer dient dazu das abzuisolierende Kabel aufzunehmen und in Eingriff mit dem vorstehenden Schneidmesser zu drücken. Nachdem ein Endabschnitt des Kabels in der Kabelklammer angeordnet ist und das Schneidmesser die Isolierung durchdrungen hat, kann das Werkzeug rund um das Kabel herum gedreht werden, um einen ringförmigen Schnitt in der Isolierung auszuführen. Der Endabschnitt der Isolierung kann im Anschluss daran vom Kabel entfernt werden, um so die Leiter freizulegen. Um ein Abisolieren von Kabeln mit relativ großem Durchmesser bzw. mit dicken und steifen Isolierummantelungen zu erleichtern, ist es bekannt, das Schneidmesser so auszugestalten, dass es gegenüber der normalen Schneidposition, in der ein Rundschnitt ausgeführt werden kann, um 90° in eine zweite Position verdreht werden kann. Dies ermöglicht die Ausführung eines Längsschnitts ausgehend vom Rundschnitt in Richtung auf das Kabelende oder entlang eines auszuklinkenden Kabelteilstücks. Ein derart eingeschnittener Kabelmantel lässt sich anschließend relativ einfach entfernen. Bei einigen Lösungen kann das Schneidmesser noch eine dritte Position einnehmen, welche zwischen der Position für den Rundschnitt und der für den Längsschnitt angeordnet ist. Diese dritte Position dient zum Ausführen eines spiralförmigen Schnitts. Mit einem spiralförmigen Schnitt lassen sich insbesondere dicke oder zähe Isolierummantelungen besonders gut entfernen.

Die DE 696 17 740 T2 beschreibt eine Abisoliervorrichtung mit einer Auswahleinrichtung, einem Klingenträger, der durch die Auswahleinrichtung abstützend gehalten ist und eine vorstehende Schneidklinge aufweist, einer verschiebbar an der Auswahleinrichtung befestigten Kabelklammer, und mit einer zusammenwirkenden Anschlageinrichtung an dem Klingenträger und der Auswahleinrichtung, um eine erste, eine zweite und eine dritte Schneidposition zu definieren. Auswahleinrichtung und Klingenträger können relativ zueinander gedreht werden. In der ersten Schneidposition kann ein Rundschnitt, in der zweiten Schneidposition ein Längsschnitt und in der dritten Schneidposition ein spiralförmiger Schnitt durchgeführt werden. Die Abisoliervorrichtung weist außerdem noch eine Federeinrichtung auf, um auf den Klingenträger eine Vorspannung in Drehrichtung relativ zu der Auswahleinrichtung aufzubringen, wodurch der Klingenträger in Drehrichtung wahlweise in die erste oder die dritte Schneidposition gedrückt wird. Mit der beschriebenen Abisoliervorrichtung ist zwar die Einnahme aller drei Schneidpositionen möglich, eine Verriegelung erfolgt jedoch nur in den Schneidpositionen "Rundschnitt" sowie "spiralförmiger Schnitt". Während der Ausübung eines Längsschnitts muss die Vorrichtung unter radialer Federspannung gehalten werden.

Aus der EP 1 322 010 B1 ist ein Kabelabmantelungswerkzeug bekannt, welches einen ersten und einen zweiten Teil umfasst, die sich relativ zueinander um eine Achse drehen können. Der erste Teil trägt in der Nähe der Achse eine Schneidklinge. Der zweite Teil trägt einen Haken, der sich axial bewegen kann und der durch ein erstes Federmittel relativ zu der Schneidklinge in Richtung auf eine Endposition vorgespannt ist. Der Haken kann zur Anpassung an unterschiedliche Kabeldurchmesser ausgetauscht werden. Mit dem ersten Teil ist eine Nockenscheibe nicht drehbar verbunden, die axial entlang des ersten Teils bewegt werden kann. Die Nockenscheibe weist rund um ihre Peripherie voneinander beabstandete Eingriffsausbildungen auf, die mit einem von dem zweiten Teil getragenen Nockenstößel zusammenwirken, um die Schneidklinge in entsprechenden Positionen relativ zu dem zweiten Teil einzustellen. Ein zweites Federmittel sorgt für ein axiales Vorspannen der Nockenscheibe, so dass der Nockenstößel und die Eingriffsausbildungen reibschlüssig im Eingriff sind. Dadurch wird nach einer manuellen Ausübung eines Drehmoments zwischen dem ersten Teil und dem zweiten Teil eine Drehung der Nockenscheibe relativ zu dem Nockenstößel ermöglicht. Außerdem wird sichergestellt, dass der Nockenstößel gegen die Wirkung eines dritten Federmittels, das für eine Drehvorspannung des zweiten Teils in Richtung auf eine vorgewählte Drehposition relativ zu dem ersten Teil ausgelegt ist, im Eingriff bleibt. Bei dieser vorbekannten Lösung erfolgt nach Abziehen des Werkzeugs immer automatisch eine Rückstellung in die Schneidposition "Rundschnitt". Um eine solche Rückstellung zu ermöglichen, wird jedoch ein zusätzliches Rückstellelement (Federmittel) benötigt. Mit jedem zusätzlichen Bauteil erhöhen sich naturgemäß auch die Herstellungskosten sowie der Wartungsaufwand.

Die Aufgabe der vorliegenden Erfindung besteht somit darin, ein verbessertes Kabelabmantelwerkzeug zur Verfügung zu stellen, welches auf einfache Art und Weise einen Wechsel zwischen unterschiedlichen Schneidpositionen ermöglicht, wobei eine gewünschte Schneidposition voreinstellbar und fixierbar sein soll, um in der gewählten Schneidposition erneut schneiden zu können, wobei das Werkzeug einen einfachen Aufbau aus möglichst wenigen Bauteilen besitzen und einen geringen Fertigungsaufwand verursachen soll.

Zur Lösung dieser Aufgabe dient ein Kabelabmantelwerkzeug gemäß dem beigefügten Anspruch 1. Das erfindungsgemäße Kabelabmantelwerkzeug zeichnet sich zum einen dadurch aus, dass der Griff durch ein zweites Federmittel gegenüber einer einen Haken tragenden, vorzugsweise konzentrisch zum Griff angeordneten Hülse verschiebbar ist. Weiterhin ist charakteristisch, dass der Griff eine in Umfangsrichtung verlaufende Nut mit mindestens drei quer zur Längserstreckung der Nut eingebrachten Rastungen aufweist, in welcher ein mit der Hülse verbundener Bolzen geführt ist, der im arbeitsbereiten Grundzustand des Kabelabmantelwerkzeugs in Eingriff mit einer der Rastungen steht. Durch Verschieben des Griffs in Richtung Haken und Drehen des Griffs kann der Bolzen von einer ursprünglich eingenommenen Raststellung in eine neue Raststellung gebracht werden. Die unterschiedlichen Rastungen sind gleichzeitig auch mit unterschiedlichen Positionen des Schneidmessers verbunden, um auf diese Weise die wahlweise Ausführung eines Längsschnitts, eines Rundschnitts oder eines spiralförmigen Schnitts zu ermöglichen.

Ein Vorteil der erfindungsgemäßen Lösung besteht darin, dass auf einfache Art und Weise eine Positionierung des Schneidmessers vorgenommen werden kann. Die integrierte Einstellungsfunktionalität bedingt außerdem nur einen sehr geringen fertigungstechnischen Mehraufwand. Es ist lediglich eine Nut mit entsprechenden Rastungen in den Griff einzubringen und die Hülse mit einem Bolzen zu versehen. Weiterhin wird noch ein Federmittel benötigt, welches ein Verschieben des Griffs relativ zur Hülse ermöglicht. Im arbeitsbereiten Grundzustand des Abmantelwerkzeugs ist der Bolzen in einer der Rastungen arretiert, wodurch die Hülse gegen ein unerwünschtes Verdrehen gesichert ist. Ein ungewolltes Verstellen der Schnittrichtung kann somit sicher vermieden werden. Mit dem erfindungsgemäßen Kabelabmantelwerkzeug kann eine beabsichtigte Schneidposition vorgewählt bzw. voreingestellt und fixiert werden. Eine einmal gewählte Schneidposition kann beibehalten werden, um in dieser Schneidposition erneut zu schneiden. Dadurch, dass erfindungsgemäß auf eine automatische Rückführung in eine vorbestimmte Schneidposition verzichtet wird, vereinfacht sich der Aufbau im Vergleich zu den vorbekannten Lösungen. Damit liegen auch weniger Verschleißteile vor und der Wartungsaufwand verringert sich deutlich.

Nach einer bevorzugten Ausführungsform besteht der Haken aus einem zur Aufnahme eines Kabels dienenden Oberteil und einem von der Hülse aufgenommen Unterteil. Das Oberteil ist dabei lösbar, beispielsweise über eine Schraube oder einen Federbolzen, mit dem Unterteil verbunden. Bei Verschleiß des Oberteils kann dieses problemlos ausgetauscht werden. In diesem Zusammenhang hat es sich bei einer weitergebildeten Ausführungsform als besonders zweckmäßig erwiesen, wenn an dem Unterteil verschiedene Oberteile montierbar sind, welche sich dadurch unterscheiden, dass sie an verschiedene Kabeldurchmesser oder -querschnittsformen angepasst sind. Diese Anpassbarkeit wird dadurch erreicht, dass die Oberteile unterschiedliche wirksame Längen zur Halterung der Kabel aufweisen. Aus dem Stand der Technik ist es bekannt, komplette Austauschhaken mit unterschiedlich wirksamen Längen vorzuhalten, um das Werkzeug an den Kabeldurchmesser anzupassen. Zur Anpassung ist jedoch ein Austausch des kompletten Hakens erforderlich, was mit einem deutlich erhöhtem Materialaufwand verbunden ist, da nicht nur der zur Aufnahme des Kabels dienende variable Teil sondern auch der vom Werkzeug aufgenommene Teil ausgetauscht werden muss. Darüber hinaus muss bei vorbekannten Lösungen für einen kompletten Austausch des Hakens eine zumindest teilweise Demontage des Werkzeuges erfolgen.

Bei einer weiteren vorteilhaften Ausführungsform ist das Oberteil mit einer Profilierung versehen. Diese Profilierung ist an die Profilierung des abzumantelnden Kabels angepasst. Auf diese Weise können auch langverdrallte Formkabel problemlos abgemantelt werden, da durch die Profilierung des Oberteils das Werkzeug dem Verlauf der Profilierung des Kabels beim Längsschnitt folgen kann.

Weiterhin ist es vorteilhaft, wenn der Griff über eine Schiebeverzahnung mit dem Innenkörper verbunden ist. Durch die Schiebeverzahnung kann eine form- und kraftschlüssige Verbindung zwischen Griff und Innenkörper hergestellt werden. Nach einer vorteilhaften Ausführungsform ist am Innenkörper ein Sicherungsring angeordnet ist, der die Verschiebung des Griffs durch das zweite Federmittel begrenzt. Als zweckmäßig hat es sich erwiesen, wenn das Schneidmesser lösbar mit dem Innenkörper verbunden ist. Bei Verschleiß kann das Schneidmesser somit problemlos ausgewechselt werden.

Bei einer weiteren bevorzugten Ausführungsform ist die Nut von außen verdeckt in den Griff eingebracht oder mit einer die Nut überdeckende Abdeckung versehen. Eine derart ausgestaltete Nut ist von außen nicht zugänglich. Sie kann daher nicht verschmutzen. Außerdem besteht auch nicht die Gefahr, dass sich der Bediener während des Abmantelungsvorgangs in der Nut klemmen kann. Es soll jedoch keine Einschränkungen auf Ausführungsformen mit verdeckter Nut erfolgen. Ausführungsformen mit offener Nut sind natürlich ebenfalls möglich.

Weiterhin ist es vorteilhaft, wenn der Griff eine Anzeige für die eingestellte Schneidposition aufweist. Dadurch ist für den Bediener jederzeit problemlos ersichtlich, in welcher Schneidposition sich das Werkzeug gerade befindet.

Weitere Vorteile, Einzelheiten und Weiterbildungen der vorliegenden Erfindung ergeben sich aus der nachfolgenden Beschreibung einer bevorzugten Ausführungsform, unter Bezugnahme auf die Zeichnung. Es zeigen:
- Fig. 1: eine Vorderansicht eines erfindungsgemäßen Kabelabmantelwerkzeugs in einer ersten Ausführungsform;
- Fig. 2: eine Schnittdarstellung des erfindungsgemäßen Kabelabmantelwerkzeugs entlang einer Linie A-A in Fig. 1;
- Fig. 3: eine Schnittdarstellung des erfindungsgemäßen Kabelabmantelwerkzeugs entlang einer Linie B-B in Fig. 2;
- Fig. 4: eine Vorderansicht des erfindungsgemäßen Kabelabmantelwerkzeugs in einer zweiten Ausführungsform.

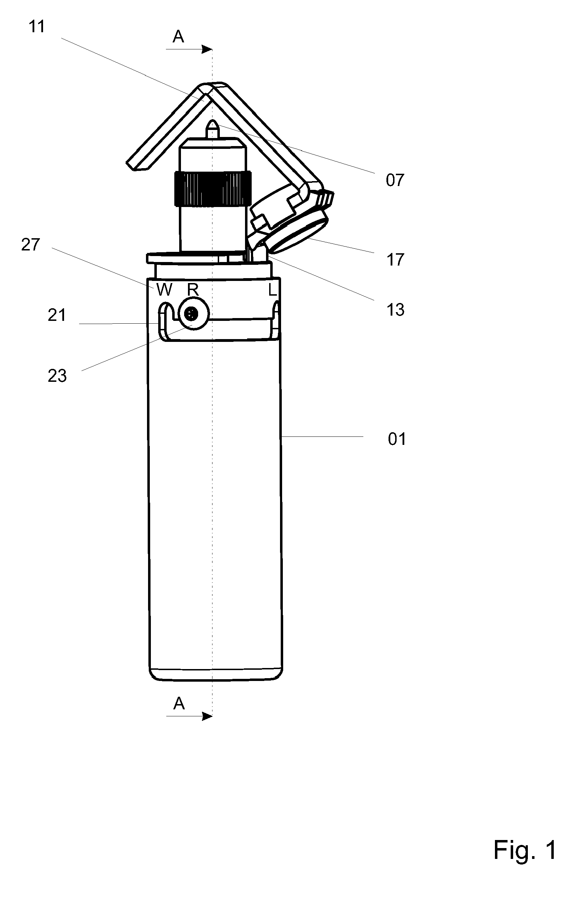

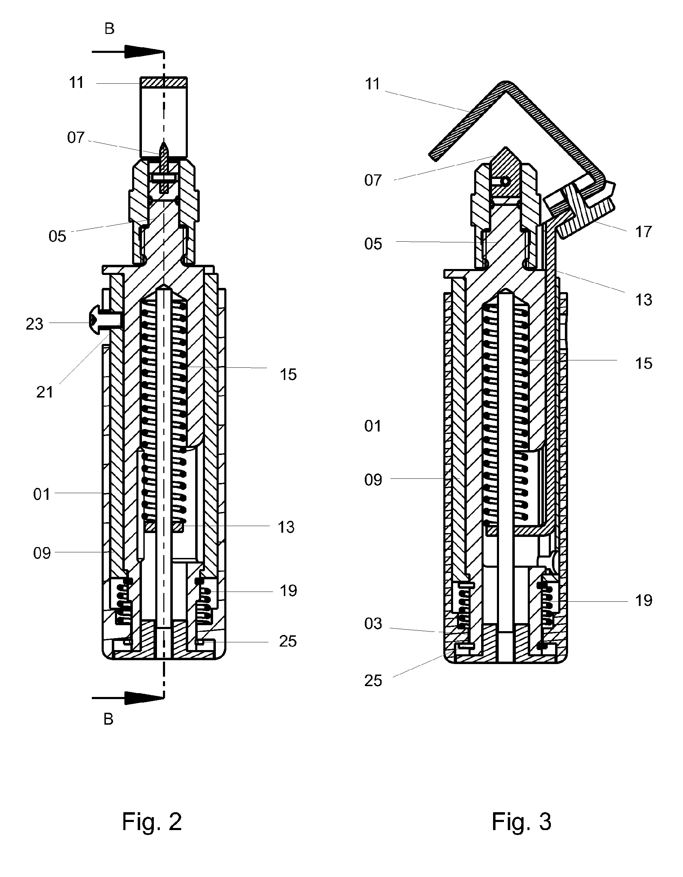

Die nachfolgende Beschreibung des erfindungsgemäßen Kabelabmantelwerkzeugs erfolgt zunächst unter gleichzeitiger Bezugnahme auf die Fig. 1, 2 und 3.

Das erfindungsgemäße Kabelabmantelwerkzeug umfasst einen hülsenförmigen Griff 01 und einen innerhalb des Griffs 01 angeordneten und mit diesem über eine Schiebeverzahnung 03 form- und kraftschlüssig verbundenen Innenkörper 05. An dem aus dem Griff 01 herausragenden Ende des Innenkörpers 05 ist ein Schneidmesser 07 angeordnet. Zwischen Griff 01 und Innenkörper 05 ist eine Hülse 09 konzentrisch angeordnet. Griff 01 und Hülse 09 sind relativ zueinander um eine Achse drehbar. Mit der Hülse 09 ist ein Haken 11, 13 verbunden. Der Haken 11, 13 ist relativ zum Griff axial bewegbar und durch ein erstes Federmittel 15 relativ zu dem Schneidmesser 07 in Richtung auf eine Endposition vorgespannt. Das erste Federmittel 15 ist vorzugsweise als Druckfeder ausgeführt. Der Haken besitzt eine konkave Seite 11, die dem Schneidmesser 07 zugewandt ist und zur Aufnahme des abzumantelnden Kabels dient, und einen im Wesentlichen axial ausgerichteten Schaft 13, der von der Hülse 09 aufgenommen wird. Vorzugsweise besteht der Haken aus einem Oberteil 11 (entspricht hier der konkaven Seite) und einem Unterteil 13 (entspricht hier dem Schaft), welche lösbar über eine Schraube 17 oder ein vergleichbares Verbindungsmittel miteinander verbunden sind. Andere Varianten der Verbindung von Oberteil 11 und Unterteil 13 sind möglich. Beispielsweise kann das Oberteil 11 auch in eine entsprechende Nut des Unterteils 13 einrasten. An dem Unterteil 13 können verschiedene Oberteile 11 befestigt werden, die an verschiedene Kabeldurchmesser angepasst sind. Dadurch, dass der Haken 11, 13 zweiteilig ausgeführt ist, kann das Werkzeug somit problemlos an Kabel verschiedener Durchmesser angepasst werden. Hierzu ist lediglich ein Austauschen des Oberteils 11 erforderlich. Ein Austauschen des Oberteils 11 kann auch bei Verschleiß des selbigen notwendig werden.

Der Griff 01 ist durch ein zweites Federmittel 19 gegenüber der den Haken 11, 13 tragenden Hülse 09 verschiebbar. Das zweite Federmittel 19 ist vorzugsweise als Druckfeder ausgeführt. In den Griff 01 ist eine Nut 21 eingebracht, welche mindestens drei Rastungen aufweist. Die Nut 21 kann verdeckt oder offen angebracht sein. In dieser Nut 21 ist ein mit der Hülse 09 verbundener Bolzen 23 geführt.

Im arbeitsbereiten Grundzustand des Abmantelwerkzeugs steht der Bolzen 23 in Eingriff mit einer der Rastungen. Der Griff 01 ist in diesem Grundzustand durch das zweite Federmittel 19 derart nach unten geschoben, also in eine vom Haken axial entfernte Position gedrängt, dass er an einen Sicherungsring 25 anschlägt. Der Sicherungsring 25 ist an der Unterseite des Innenkörpers 05 befestigt und verhindert, dass der Griff vom Innenkörper abgestreift wird. Jede der Rastungen ist mit einer bestimmten Stellung des Schneidmessers 07 relativ zum Haken 11, 13 verbunden. In einer ersten Raststellung ist das Schneidmesser 07 so positioniert, dass ein Rundschnitt durchgeführt werden kann. In einer zweiten Raststellung ist das Schneidmesser 07 zur Ausführung eines Längsschnitts ausgerichtet. In einer dritten Raststellung ist das Schneidmesser 07 so positioniert, dass ein spiralförmiger Schnitt durchgeführt werden kann.

Durch Verschieben des Griffs 01 in Richtung Haken 11, 13 und Drehen des Griffs kann der Bolzen 23 von seiner ursprünglich eingenommenen Raststellung in eine neue Raststellung gebracht werden. Damit einher geht ebenfalls eine entsprechende Neupositionierung des Schneidmessers 07. Eine einmal eingenommene Raststellung bleibt so lange erhalten, bis der Griff 01 erneut in Richtung Haken 11, 13 geschoben und in die gewünschte Stellung gedreht und arretiert wird. Dadurch, dass der Bolzen 23 im arbeitsbereiten Grundzustand des Werkzeugs in einer der Rastungen arretiert ist, ist die Hülse 09 gegen ein unerwünschtes Verdrehen gesichert. Ein ungewolltes Verstellen der Schnittrichtung kann somit sicher vermieden werden. Zum Einstellen und Erkennen der jeweils gewünschten Schneidposition hat es sich als zweckmäßig erwiesen, wenn der Griff 01 mit einer entsprechenden Anzeige 27 für die Schneidposition versehen ist.

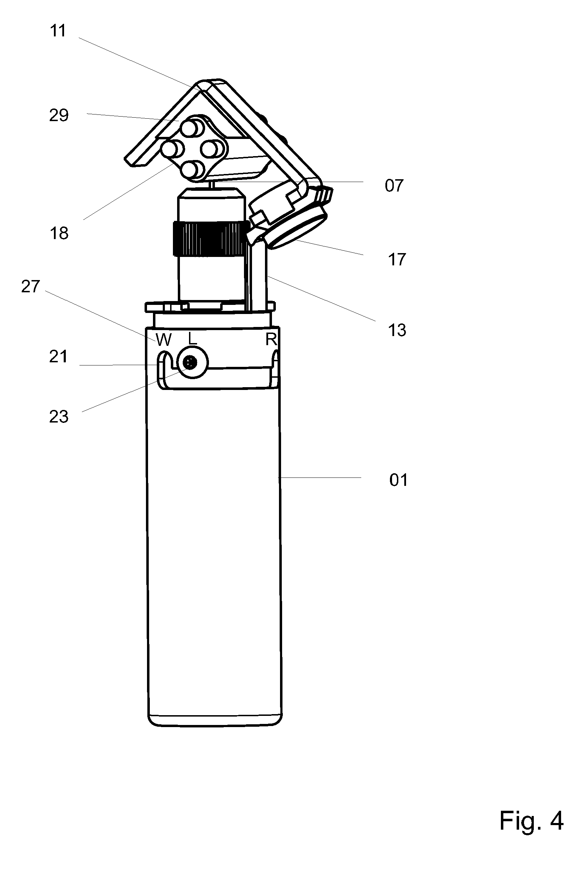

In Fig. 4 ist eine abgewandelte Ausführungsform des Abmantelwerkzeugs gezeigt. Das Oberteil 11 besitzt hier eine Profilierung 29, welche an eine vorhandene Profilierung des abzumantelnden Kabels angepasst ist. Dadurch kann auch bei einem Formkabel 18 problemlos ein Längsschnitt ausgeführt werden, da das Werkzeug bei einer Bewegung in Längsrichtung des Formkabels 18 durch die Profilierung 12 des Oberteils 11 der Profilierung des Formkabels 18 folgt. Aufgrund der Einrastung des Bolzens 23 in die Rastung für Längsschnitt kommt es selbst bei der Verarbeitung solcher profilierter Kabel zu einem sauberen Längsschnitt und nicht zu einem Schräglaufen des Schneidmessers 07.

### Bezugszeichenliste

- 01: Griff
- 03: Schiebeverzahnung
- 05: Innenkörper
- 07: Schneidmesser
- 09: Hülse
- 11: Oberteil des Hakens
- 13: Unterteil des Hakens
- 15: erstes Federmittel
- 17: Schraube
- 18: Formkabel
- 19: zweites Federmittel
- 21: Nut
- 23: Bolzen
- 25: Sicherungsring
- 27: Anzeige für die Schneidposition
- 29: Profilierung des Oberteils

## Patentansprüche

1. Kabelabmantelwerkzeug umfassend:
- einen hülsenförmigen Griff (01), welcher eine in Umfangsrichtung verlaufende Nut (21) mit mindestens drei quer zur Längserstreckung der Nut eingebrachten Rastungen aufweist;
- einen innerhalb des Griffs (01) angeordneten und mit diesem beweglich verbundenen Innenkörper (05);
- ein Schneidmesser (07), welches an dem aus dem Griff (01) herausragenden Ende des Innenkörpers (05) angeordnet ist;
- eine zwischen Griff (01) und Innenkörper (05) angeordnete Hülse (09) mit einem Bolzen (23), welcher in der Nut (21) des Griffs (01) geführt ist und im arbeitsbereiten Grundzustand des Abmantelwerkzeugs in Eingriff mit einer der Rastungen steht;
- einen mit der Hülse (09) verbundenen Haken (11, 13), der gegenüber dem Griff axial verschiebbar ist und durch ein erstes Federmittel (15) relativ zu dem Schneidmesser (07) in Richtung auf eine Endposition vorgespannt ist, wobei der Haken (11, 13) eine konkave Seite hat, die dem Schneidmesser (07) zugewandt ist und der Aufnahme des abzumantelnden Kabels dient, und wobei der Haken (11, 13) außerdem einen im wesentlichen axial ausgerichteten Schaft aufweist, der von der Hülse (09) aufgenommen wird;
wobei Griff (01) und Hülse (09) relativ zueinander um eine Achse drehbar sind, wobei der Griff (01) gegenüber der Hülse (09) axial verschiebbar ist und von einem zweiten Federmittel (19) in eine axial entfernt liegende Position gedrängt wird, wobei durch axiale Verschiebung des Griffs (01) in Richtung Haken (11, 13) und Verdrehung des Griffs (01) der Bolzen (23) von einer ursprünglich eingenommenen Raststellung in eine neue Raststellung bringbar ist, und wobei die unterschiedlichen Rastungen mit unterschiedlichen Positionen des Schneidmessers (07) korrespondieren, um die wahlweise Ausführung eines Längsschnitts, eines Rundschnitts oder eines spiralförmigen Schnitts am Kabel zu ermöglichen.

2. Kabelabmantelwerkzeug nach Anspruch 1, **dadurch gekennzeichnet, dass** der Haken (11, 13) aus einem zur Aufnahme eines Kabels dienenden Oberteil (11) und einem von der Hülse (09) aufgenommen Unterteil (13) besteht, wobei das Oberteil (11) lösbar mit dem Unterteil (13) verbunden ist.

3. Kabelabmantelwerkzeug nach Anspruch 2, **dadurch gekennzeichnet, dass** an dem Unterteil (13) verschiedene Oberteile (11) montierbar sind, wobei die Oberteile (11) sich **dadurch** unterscheiden, dass sie an verschiedene Kabeldurchmesser angepasst sind.

4. Kabelabmantelwerkzeug nach Anspruch 2 oder 3, **dadurch gekennzeichnet, dass** das Oberteil (11) eine Profilierung (29) aufweist, wobei diese Profilierung (29) an die Profilierung des abzumantelnden Kabels (18) angepasst ist.

5. Kabelabmantelwerkzeug nach einem der Ansprüche 1 bis 4, **dadurch gekennzeichnet, dass** der Griff (01) über eine Schiebeverzahnung (03) mit dem Innenkörper (05) verbunden ist.

6. Kabelabmantelwerkzeug nach einem der Ansprüche 1 bis 5, **dadurch gekennzeichnet, dass** am Innenkörper (05) ein Sicherungsring (25) angeordnet ist, der die axiale Verschiebung des Griffs (01) durch das zweite Federmittel (19) begrenzt.

7. Kabelabmantelwerkzeug nach einem der Ansprüche 1 bis 6, **dadurch gekennzeichnet, dass** das Schneidmesser (07) lösbar mit dem Innenkörper (05) verbunden ist.

8. Kabelabmantelwerkzeug nach einem der Ansprüche 1 bis 7, **dadurch gekennzeichnet, dass** das erste und zweite Federmittel (15, 19) Druckfedern, insbesondere Spiraldruckfedern sind.

9. Kabelabmantelwerkzeug nach einem der Ansprüche 1 bis 8, **dadurch gekennzeichnet, dass** die Nut (21) von außen verdeckt in den Griff (01) eingebracht ist oder eine die Nut (21) überdeckende Abdeckung aufweist.

10. Kabelabmantelwerkzeug nach einem der Ansprüche 1 bis 9, **dadurch gekennzeichnet, dass** der Griff (01) eine Anzeige (27) für die eingestellte Schneidposition aufweist.
